(19)

**Europäisches Patentamt**

**European Patent Office**

**Office européen des brevets**

(11) **EP 4 375 868 A1**

(12) **EUROPEAN PATENT APPLICATION**

(43) Date of publication:
**29.05.2024 Bulletin 2024/22**

(21) Application number: **23204903.1**

(22) Date of filing: **20.10.2023**

(51) International Patent Classification (IPC):
**G06F 30/28** (2020.01)

(52) Cooperative Patent Classification (CPC):
**G06F 30/28**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.11.2022 IN 202221067747**

(71) Applicant: **Tata Consultancy Services Limited Maharashtra (IN)**

(72) Inventors:
• **AHMAD, DILSHAD**
  **411013 Pune (IN)**
• **KULKARNI, HRISHIKESH NILKANTH**
  **411013 Pune (IN)**
• **MAURYA, MITHILESH KUMAR**
  **411013 Pune (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **PHYSICS-AWARE MESHING TECHNIQUES FOR GENERATING GRIDS FOR OBJECTS**

(57) Computational Fluid Dynamic, Finite Element Methods (FEM), and other engineering modelling and simulation requires meshing (numerical grid generation) of the geometry. The meshing is done by meshing software and the CFD expert need to provide meshing parameters. Existing approaches involve a lot of human intervention which leads to additional computational time and may be prone to errors. Present disclosure provides system and method that construct meshed geometry based a first mesh generated using meshing parameters wherein the meshed geometry is compared with original geometry of an object under consideration to estimate the surface size. Further, the first mesh is simulated in an iterative manner to obtain parameters such as domain size, refinement zone, and layer parameters of the object under consideration until these parameters reach an associated threshold and a mesh independent grid is obtained for the object based on the above-mentioned parameters.

**FIG. 2**

EP 4 375 868 A1

**Description**

CROSS-REFERENCE TO RELATED APPLICATIONS AND PRIORITY

The present application claims priority to Indian application no. 202221067747, filed on November 24, 2022.

TECHNICAL FIELD

The disclosure herein generally relates to mesh generation techniques, and, more particularly, to physics-aware meshing techniques for generating grids for objects.

BACKGROUND

Mesh generation is assumed to be an art and is done for Computational Fluid Dynamic, Finite Element Methods (FEM), and other engineering modelling and simulation by subject matter expert(s) (SMEs). The most advance meshing software today are dependent on the inputs provided by the user. For instance, Computational Fluid Dynamic (CFD) modelling and simulation requires meshing (numerical grid generation) of the geometry. The meshing is done by a meshing software and the CFD expert need to provide meshing parameters. The software then carries out the meshing of the geometry. Therefore, existing approaches involve a lot of human intervention which leads to additional computational time and may be prone to errors. Due to this a novice user may not be able to create a decent quality mesh.

SUMMARY

Embodiments of the present disclosure present technological improvements as solutions to one or more of the above-mentioned technical problems recognized by the inventors in conventional practice/method.

For example, in an embodiment, there are provided physics-aware meshing systems and methods for generating grids for objects. An input comprising a first geometry of an object is received in a predefined format (e.g., STereoLithography (STL) format). The first geometry may also be referred as original geometry and interchangeably used herein. Further, following steps are iteratively performed. At first, a first mesh (e.g., also referred as coarse mesh and interchangeably used herein) is generated using a first set of meshing parameters comprised in a meshing dictionary. Then, a second geometry is constructed for the object based on the first mesh. The second geometry may also be referred as meshed geometry and interchangeably used herein. Both the first geometry (e.g., original geometry) and the second geometry (e.g., the meshed geometry) of the object are compared. More specifically, point clouds of first geometry (e.g., original geometry) and point clouds of the second geometry (e.g., the meshed geometry) of the object are compared using a Housdroff distance technique. In case they are not equal or do not match in size/shape, then surface size is estimated. The above step may be better understood by way of following description.

The first and foremost requirement of meshing is to capture the geometry. Capturing of the body geometry is important to model the physics and for the estimation of forces and moments acting on the body. The geometry is surface file in STL (STereoLithography) format. This may have number of small features attached to the main geometry. These features may be of different sizes and shapes. The geometry may also be a collection of disjoint close geometries. The very first and important parameter to estimate is the surface size for each of the feature to capture the geometry with good accuracy. The accuracy of the meshed geometry is estimated by comparing the meshed geometry with the actual geometry. The captured meshed geometry is extracted from the first mesh and is compared with the original geometry using the Housdroff distance technique.

Once the surface size is estimated, one or more layer parameters on the object are calculated based one or more y-plus values calculated from a simulation of the first mesh. The one or more layer parameters include number of layers to be added on the object, size (e.g., thickness) of a first layer, an expansion ratio, and the like. The number of layers to be added on the object is calculated based on the simulation of the first mesh. For instance, at first, the one or more y-plus values ($y^+$) are calculated over a wall type of the object after simulation of the first mesh. Further, a minimum size of the first mesh at a wall of the object is calculated based on the one or more y-plus values ($y^+$), one or more target y-plus values ($y^+$-target) and a current cell size in the first mesh. Furthermore, the number of layers to be added on the object is calculated based on the minimum size of the first mesh with a pre-defined expansion ratio. The above steps of determining number of layer additions are better understood by way of following description. For instance, capturing boundary layer of the object is important for the calculation of force and moments on the body. The one or more y-plus values ($y^+$) at the wall type boundary are calculated after each simulation being performed on the first mesh. The minimum size of the first mesh at the wall is calculated by interpolating values of $y^+$ and current cell size. Final thickness $l_f$ is a calculated value of the cell thick of the first layer. $l_i$ is an initial thickness of the first layer. The $y^+$ is the calculated value corresponding to the $l_i$ and $y^+$-target is the desired value of the $y^+$. The number of layers is calculated with geometric progression and predefined expansion ratio r. This calculation continues at each iteration until calculated $y^+$ value is below desired values.

Further, one or more refinement zones associated with the object are calculated based on one or more absolute errors of one or more field variables calculated by taking an absolute difference of (i) a value of a first set of field variables on the first mesh and (ii) a value of a second set of field variables of a second mesh (e.g., also referred as 'fine mesh' and interchangeably used herein) being mapped onto the first mesh. The value of the first set of field variables on the first mesh and the value of the second set of field variables on the second mesh are obtained by simulating the first mesh and the second mesh. Like the first mesh, the second mesh is generated using a second set of meshing parameters comprised in the meshing dictionary. The purpose of refinement zone is to capture the physics of a problem within a specific domain. There may be a sharp change in the direction and values of associated field variables because of the meshed geometry and the physics of the problem. Capturing of sharp changes need refinement of the coarse mesh (e.g., first mesh) in those regions. The meshing processes starts with a constant mesh size for the entire domain. A CFD model is created for this mesh geometry. Simulation is carried out and field variables are obtained. Similarly, a fine mesh with constant mesh size is created, wherein simulation is done, and field variables are obtained. The above step of calculating the one or more refinement zones may be better understood by way of following description: To calculate the refinement zone, firstly, a first mesh size is calculated based on a pre-computed background mesh size. Similarly, a second mesh size is calculated based on the first mesh size. Further, the first mesh and the second mesh are created using the first mesh size and the second mesh size, respectively. The physics on the first mesh and the second mesh are simulated, respectively. Based on the simulation of the first mesh and the second mesh, the one or more absolute errors of the one or more field variables are calculated by taking an absolute difference of (i) a value of the first set of field variables obtained from the simulation of the first mesh and (ii) a value of the second set of field variables obtained from the simulation of the second mesh being mapped onto the first mesh. In other words, the mapped result is subtracted from the original results at the first mesh to obtain the one or more absolute errors. The one or more absolute errors are then compared with an error threshold wherein the one or more refinement zones in the second mesh are calculated based on this comparison by enclosing one or more error regions with an iso surface of an error equal to the error threshold. In other words, difference of the field variables is taken over the coarse mesh (first mesh), and absolute value of the difference is calculated. Further, an iso-surface (e.g., 3D surfaces(s) representation of points) is created with an error threshold and the iso surfaces may be one or more than one. In another embodiment a scaled error is calculated by dividing the error field with field values of the first mesh. In one embodiment, this surface is taken as refinement zones and used in the meshing dictionary. In another embodiment, a bounding box over a closed volume is created to calculate the refinement zone and information of the refinement zones is passed to the meshing dictionary. The above process is repeated until the one or more absolute errors are less than (or below than) or equal to the error threshold.

Further, the domain size for the object based on the simulation of the first mesh. The domain size for the object is calculated when the object is either in a first region or a second region. For instance, the first region is referred to a region wherein the object is placed on a ground (or ground region), and the second region is referred to a region wherein the object is away from the ground and moving in air/water, or vice-versa. At first, a domain size is incremented by adding one or more layers on a plurality of directions of the object based on the first mesh. For instance, at first, the domain size is incremented by adding one or more layers on a plurality of directions of the object based on the first mesh. The plurality of directions includes but are not limited to, front, back, sides, top, bottom, and the like. Based on the incremented domain size, the first mesh is simulated, and the force is calculated after performing the simulation of the first mesh. The above steps of incrementing the domain size, simulating the first mesh, and calculating the force are iteratively performed by the system 100 until a difference in the force of a current iteration and a previous iteration reaches a force threshold.

When the object is away from the ground and is moving in air or water simulation domain is needed to be extended in all the directions. Similarly, when the object is placed on the ground bottom side domain shall not be extended. However, domain shall be extended in rest of the directions as required in the case where the object is away from the ground. The object dimensions in all three directions may or may not be same. So maximum of the all the sides of the bounding box is taken of extent calculations.

The extent of the domain affects the drag force calculated using CFD analysis. It is found that as the extend of the domain around the object is changed the force changes. It is also found that after certain limit, a further change in the dimensions do not affect the values of the force acting on the object. The force acting on the object can be considered as objective for the calculations of domain dimensions. The 3 dimensions may affect the value of the force acting on the object in separate way depending on the shape of the object, however all the changes in the force calculation shall achieve a limiting value as domain dimensions reach to its maximum values. The systems and methods described herein iteratively perform the steps until a respective objective associated with the one or more surface sizes, the domain sizes, the one or more layer parameters, and the one or more refinement zones reach an associated threshold to obtain a mesh independent grid.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 depicts an exemplary system for generating grids for objects, in accordance with an embodiment of the present disclosure.
FIG. 2 depicts an exemplary flow chart illustrating a physics-aware meshing method for generating grids for objects, using the system of FIG. 1, in accordance with an embodiment of the present disclosure.
FIG. 3 depicts a first geometry (e.g., original geometry) of an object under consideration, in accordance with an embodiment of the present disclosure.
FIG. 4 depicts a second geometry (e.g., meshed geometry) of the object under consideration, in accordance with an embodiment of the present disclosure.
FIG. 5 depicts a flow diagram illustrating a method for determining number of layers to be added on the object under consideration, in accordance with an embodiment of the present disclosure.
FIG. 6 depicts layer addition over an object in a first mesh generated using a first set of meshing parameters comprised in a meshing dictionary, in accordance with an embodiment of the present disclosure.
FIG. 7 depicts a flow diagram illustrating a method for calculating the refinement zone associated with the object based on the simulation of the first mesh, in accordance with an embodiment of the present disclosure.
FIG. 8 depicts mapping of one or more field variables of a second mesh to associated field variables of the first mesh, in accordance with an embodiment of the present disclosure.
FIG. 9 depicts a flow diagram illustrating a method for calculating the domain size based on the simulation on the first mesh, in accordance with an embodiment of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

As mentioned earlier, mesh generation is done for Computational Fluid Dynamic, Finite Element Methods (FEM), and other engineering modelling and simulation by subject matter expert(s) (SMEs). The most advance meshing software today are dependent on the inputs provided by the user. For instance, CFD modelling, and simulation requires meshing (numerical grid generation) of the geometry which require the CFD expert to provide meshing parameters. The software then carries out the meshing of the geometry. Therefore, existing approaches involve a lot of human intervention which leads to additional computational time and may be prone to errors. Due to this a novice user may not be able to create a decent quality mesh. Embodiments of the present disclosure provides an objective and physics-aware meshing system and method that eliminate the need for a human expert to generate the numerical mesh. It also generates mesh in much less time and creates mesh with an optimum number of cells or elements.

The acceptance criteria for the generated mesh are the solution which is grid independent. The grid independence over the entire domain depends on the background mesh size, refinement zones, surface mesh size and layer parameters. The meshing process is iterative and terminates only when the criteria for the mesh independence is achieved. More specifically, the system and method of the present disclosure capture the physics of the problem within a predefined error limit. A fine mesh reduces the error, but it increases the simulation time and demands for more computational resources. While a course mesh results into a faster simulation, but the results obtained have errors. So, a good mesh shall be the one with least number of cells while reducing the simulation errors below a threshold limit. Such meshes are generated through a process called mesh independent study. In the present disclosure, the system and method take mesh independence as the decision criteria for calculation of mesh parameters and a precise calculation of parameters that affect the number cells to keep the cell count to a minimum value.

Traditionally, the error in CFD has been calculated at two levels. In one level, a theoretical calculation is done using a quite simple 1-Dimensional ordinary equations such as 1D heat transfer. Such an analysis provides a good understanding of the sources of the error. However, this kind of calculations are not possible for real life problems. In another level, error calculation is done by comparing simulated results with the measured data. To show the mesh independence, a plot of field variables is done over some selected location in the domain, and values are plotted for different meshes to show the attenuation of the error with mesh refinement.

In the present disclosure, system and method calculate error at each point of the domain corresponding to a first mesh (also referred as coarse mesh and interchangeably used herein) that is generated a first set of meshing parameters comprised in a meshing dictionary. The error is calculated at the first mesh (coarse mesh) by interpolating values of a second mesh on the first mesh. Like the first mesh, the second mesh is obtained/generated by using a second set of meshing parameters comprised in the meshing dictionary. Then the interpolated values are subtracted from that of the first mesh. Absolute values of the difference are calculated to find envelop of the domain containing error higher than the threshold values. In other words, absolute errors of field variables are calculated by taking an absolute difference of (i) a value of a first set of field variables on the first mesh and (ii) a value of a second set of field variables of the second mesh being mapped onto the first mesh. Further, these values are divided by corresponding values of the second mesh to get scaled errors. Then these values are used to estimate the central tendency of the system in terms of error distribution, mean value, standard deviation, etc.

Further, domain size is calculated when the object is either in a first region one or a second region. For instance, the first region is referred to a region wherein the object is placed on a ground (or ground region), and the second region is referred to a region wherein the object is away from the ground and moving in air/water, or vice-versa. When the object is kept on the ground, both upstream domain and the downstream domain are extended (e.g., say by a factor of 2 and 5 respectively). The upper, left, and right sides of the domain are extended by a factor value (e.g., say by a factor of 2). The upper, left, and right sides of the domain are extended by a factor of 2 (as known in the art). The lower side of the domain is the ground, so extensions is zero in this direction. In other words, domain shall not be extended. When the object is away from the ground and is moving in air or water, the domain in the lower side is extended by a factor of 2 of the object dimensions. The object dimensions in all three directions may or may not be same. So maximum of the all the sides of the bounding box is taken for extent calculations.

The extent of the domain affects the forces and moments calculated using CFD analysis. It is found that as the extend of the domain around the body is changed the force and moment acting on the body changes. It is also found that after certain limit, a further change in the dimensions do not affect the values of the force acting on the body. The forces and moment acting on the body can be considered as objective for the calculations of domain dimensions. The three dimensions may affect the value of the force acting on the body in separate way depending on the shape of the body, however all the changes in the force calculation shall achieve a limiting value as domain dimensions reach to its maximum values. In the present disclosure, the system and method have used drag force acting on the body as objective of for the calculations of the dimensions of the domain.

The CFD model remains same in this case only number of cells changes due to change in the dimensions. A first cut strategy would be to carry out a design of experiments using full factorial method and find the limiting values for the function variables (force). This study shall be carried out after getting the internals of the mesh. Moreover, capturing of the object geometry is equally important for estimation of forces and moments on the body. The geometry is surface file in STL (STereoLithography) format. This may have number of small features attached to the main geometry. These features may be of different sizes and shapes. The geometry may also be a collection of disjoint close geometries and geometry of the object may be more than one and hence sizes shall be more than one. The very first and important parameter to estimate is the surface size for each of the feature to capture the geometry with good accuracy. The captured geometry (also referred as second or meshed geometry) is extracted from the first mesh and compared with the first geometry or original geometry using a Housdroff distance technique.

The internal meshing shall be done using thumb rules for the domain dimensions. Furthermore, the background mesh size is decided by taking assumption that the mesh should capture the one hundredths of the eddy size generated in the domain. The smallest eddy is equal to the size of the smallest dimension of the domain. The subsequent meshes are having background size half of the preceding mesh background size. This refinement is further stopped on reaching the error zones half of the size of the domain. The calculation of error zones is discussed in the following sections.

Refinement zones are calculated with respect to each field variables. The simulation for the first mesh (coarse mesh) is done with pre calculated background mesh size. The second mesh (fine mesh) is generated with the background mesh size half of the first mesh size. The simulation results of the second mesh (fine mesh) for field variables ($p, U, k, e,$ etc.) are mapped to the first mesh (coarse mesh). Then this mapped result is subtracted from the original results at the first mesh. Finally, modulus of the difference is taken to make the difference a positive number. An iso surface of the error with a threshold value is created and saved as stl file. This gives extent of error region below threshold (outside the stl) and above threshold (inside the stl). Now if the extent is more than half of the domain size then the background size in the third mesh shall be half of the size of the second mesh. If the extent is less than half of the domain size, a refinement zone is created with mesh size half of the size of the second mesh. The process of refinement continues within zones until two consecutive mesh gives error less than threshold value.

Capturing boundary layer is important for the calculation of force and moments on the body. The $y^+$ values at the wall type boundary are calculated after each simulation. The minimum size of the mesh at the wall is calculate by interpolating values of $y^+$ and current cell size. The number of layers is calculated with geometric progression and predefined expansion ratio. This calculation continues till calculated $y^+$ value is below the desired values. These values may range from 5 to 30 as per the objective.

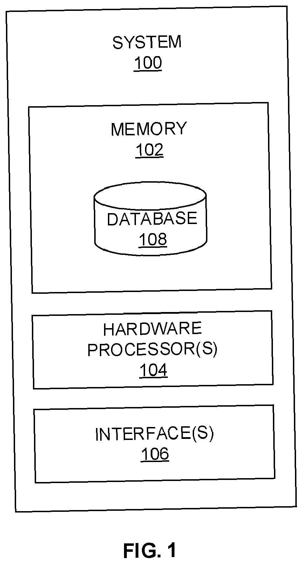

Referring now to the drawings, and more particularly to FIGS. 1 through 9, where similar reference characters denote corresponding features consistently throughout the figures, there are shown preferred embodiments and these embodiments are described in the context of the following exemplary system and/or method.

FIG. 1 depicts an exemplary system 100 for generating grids for objects, in accordance with an embodiment of the present disclosure. In an embodiment, the system 100 may also be referred to as a physics-aware meshing system or grid generation system and interchangeably used herein. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting several devices to one another or to another server.

The memory 102 may include any computer-readable medium known in the art including, for example, volatile memory, such as static random-access memory (SRAM) and dynamic-random access memory (DRAM), and/or non-volatile memory, such as read only memory (ROM), erasable programmable ROM, flash memories, hard disks, optical disks, and magnetic tapes. In an embodiment, a database 108 is comprised in the memory 102, wherein the database 108 comprises information pertaining to various objects (e.g., virtual objects), original geometry associated with the objects, meshed geometry constructed for the objects, and the like. The database 108 further comprises surface size, domain size, refinement zone, layer parameters, threshold associated with domain size, refinement zone, layer parameters that pertain to the objects, mesh independent grids generated for the objects, and the like. The memory 102 comprises one or more simulation techniques as known in the art to perform simulations on the meshed geometry of the objects, a meshing dictionary, and the like. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

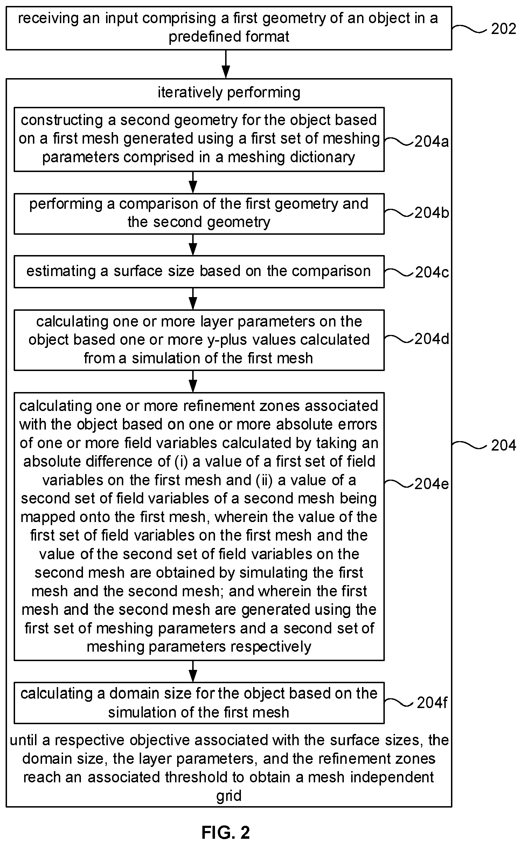

FIG. 2, with reference to FIGS. 1, depicts an exemplary flow chart illustrating a physics-aware meshing method for generating grids for objects, using the system 100 of FIG. 1, in accordance with an embodiment of the present disclosure. In an embodiment, the system(s) 100 comprises one or more data storage devices or the memory 102 operatively coupled to the one or more hardware processors 104 and is configured to store instructions for execution of steps of the method by the one or more processors 104. The steps of the method of the present disclosure will now be explained with reference to components of the system 100 of FIG. 1, and the flow diagram as depicted in FIG. 2.

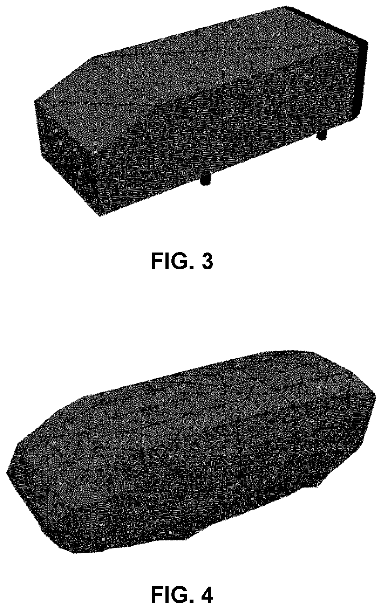

In an embodiment, at step 202 of the method of the present disclosure, the one or more hardware processors 104 receive an input comprising a first geometry of an object in a predefined format. The first geometry is an original geometry of the object under consideration, in an embodiment of the present disclosure. The expressions 'first geometry' and 'original geometry' may be interchangeably used herein. The predefined format is a STereoLithography format, in an embodiment of the present disclosure. It is to be understood by a person having ordinary skill in the art or person skilled in the art that such predefined format shall not be construed as limiting the scope of the present disclosure. The first geometry (or the original geometry) is depicted in FIG. 3. More specifically, FIG. 3 depicts a first geometry (e.g., original geometry) of an object under consideration, in accordance with an embodiment of the present disclosure.

In an embodiment, at step 204 of the method of the present disclosure, the one or more hardware processors 104 iteratively perform a plurality of steps. More specifically, at step 204a the one or more hardware processors 104 construct a second geometry for the object based on a first mesh (e.g., also referred as coarse mesh and interchangeably used herein) generated using a first set of meshing parameters comprised in a meshing dictionary. The second geometry is a meshed geometry of the object under consideration, in an embodiment of the present disclosure. The expressions 'second geometry' and 'meshed geometry' may be interchangeably used herein. In the present disclosure, a mesh (e.g., the first mesh) for the object is created using a meshing dictionary that contains mesh parameters. The meshing dictionary is started with one or more parameters taken from best practice (e.g., using domain knowledge) by the system 100. Once the first mesh is created using the one or more meshing parameters from the meshing dictionary, the second geometry is constructed using the created first mesh and the first geometry. The second geometry (also referred as meshed geometry) and interchangeably used herein is extracted from the created first mesh. More specifically, FIG. 4, with reference to FIGS. 1-3, depicts the second geometry (e.g., meshed geometry) of the object under consideration, in accordance with an embodiment of the present disclosure. It can be observed that the second geometry (or the meshed geometry) extracted or constructed from the first mesh is distorted due to size of the mesh near surface.

At step 204b of the method of the present disclosure, the one or more hardware processors 104 perform a comparison of the first geometry and the second geometry of step 204a. In other words, the original geometry and the meshed geometry are compared. At step 204c of the method of the present disclosure, the one or more hardware processors 104 estimate one or more surface sizes based on the comparison. If output from the comparison of the first geometry and the second geometry is greater than a pre-defined threshold, then a new surface size is estimated. Else, if the output from the comparison of the first geometry and the second geometry is equal to the pre-defined threshold, then the existing surface size is of an acceptable surface size. The above steps of 202 till 204c are better understood by way of following description:

The first and foremost requirement of meshing is to capture a geometry of the object. Capturing of the geometry of the object is important to model physics and for the estimation of forces and moments acting on the object. The geometry is a surface file in STL (STereoLithography) format. This may have number of small features attached to the first geometry (also referred as original geometry). These features may be of different sizes and shapes. The geometry may also be a collection of disjoint close geometries. The very first and important parameter to estimate is the surface size for each of the feature to capture the geometry with good accuracy. The accuracy of the second geometry is estimated by comparing the first geometry and the second geometry. The second geometry is extracted from the first mesh and compared with the first geometry using a Housdroff distance technique (a distance measuring technique as known in the art). The comparison of the first geometry (e.g., original geometry) and the second geometry (e.g., meshed geometry) includes comparing a set of point clouds of the first geometry and an associated set of point clouds of the second geometry. The step of comparison is repeated until the difference between the first geometry and the second geometry reaches a surface size threshold. Based on the comparison, surface size is estimated. Since geometry of the object may be more than one and surface sizes shall be more than one, and hence the system 100 estimates the one or more surface sizes.

At step 204d of the method of the present disclosure, the one or more hardware processors 104 calculate one or more layer parameters (also referred as layer parameters and interchangeably used herein) on the object based on a simulation of the first mesh. In other words, the layer parameters are outputted by the system 100 upon simulating the first mesh. The layer parameters include, but are not limited to, number of layers to be added on the object, size (e.g., thickness) of a first layer, an expansion ratio, and the like. The number of layers to be added on the object is calculated based on the simulation of the first mesh. For instance, at first, the one or more y-plus values are calculated over a wall type of the object based on the simulation of the first mesh. Further, a minimum size of the first mesh at a wall of the object is calculated based on the one or more y-plus values, one or more target y-plus values and a current cell size in the first mesh. Furthermore, the number of layers to be added on the object is calculated based on the minimum size of the first mesh with a pre-defined expansion ratio. The above steps of determining number of layer additions are better understood by way of following description:

Capturing boundary layer of the object is important for the calculation of force and moments on the body. y-plus ($y^+$) values at the wall type boundary are calculated after each simulation being performed on the first mesh. The minimum size of the first mesh at the wall is calculated by interpolating values of y+ and current cell size using equation (1) below. In the equation, $l_f$ is a calculated value of the cell thick of the first layer. $l_i$ is an initial thickness of the first layer. The y+ is the calculated value corresponding to the $l_i$ and y+ -target is the desired value of the y+. The number of layers is calculated with geometric progression and predefined expansion ratio $r$ using equation (2). This calculation continues at each iteration until calculated y+ value is below desired values. These values may range from 5 to 30 as per the objective.

$$l_f = l_i \times \frac{y^+_{target}}{y^+} \qquad (1)$$

$$n = 1 + \ln\left(\frac{l_{global}}{l_f}\right) / \ln(r) \qquad (2)$$

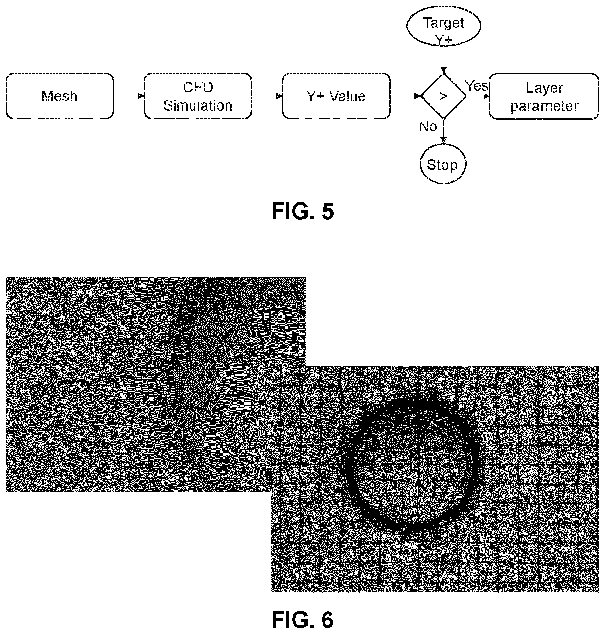

FIG. 5, with reference to FIGS. 1 through 4, depicts a flow diagram illustrating a method for determining number of layers to be added on the object under consideration, in accordance with an embodiment of the present disclosure. As can be seen from FIG. 5, the first mesh serves as an input to the system 100 wherein the system 100 performs a simulation on the first mesh. The simulation performed by the system 100 is Computational Fluid Dynamics (CFD) simulation, in one example embodiment of the present disclosure. It is to be understood by a person having ordinary skill in the art or person skilled in the art that such simulation technique as described above shall not be construed as limiting the scope of the present disclosure. Once the simulation is performed, output includes $y^+$ values calculated over the object where boundary layer needs to be calculated. These $y^+$ values are compared with target $y^+$ values and based on the comparison, layer parameters like thickness of the first layer, number of layers, layer expansion ratio, etc. are determined/calculated. The meshing dictionary is updated with the layer parameters accordingly. FIG. 6, with reference to FIGS. 1 through 5, depicts layer addition over an object in the first mesh generated using the first set of meshing parameters comprised in the meshing dictionary, in accordance with an embodiment of the present disclosure. More specifically, FIG. 6 depicts layer addition over a sphere serving as an object.

Referring to steps of FIG. 2, at step 204e of the method of the present disclosure, the one or more hardware processors 104 calculate one or more refinement zones associated with the object based on one or more absolute errors of one or more field variables calculated by taking an absolute difference of (i) a value of a first set of field variables on the first mesh and (ii) a value of a second set of field variables of a second mesh (e.g., also referred as 'fine mesh' and interchangeably used herein) being mapped onto the first mesh. The value of the first set of field variables on the first mesh and the value of the second set of field variables on the second mesh are obtained by simulating the first mesh and the second mesh. Like the first mesh, the second mesh is generated using a second set of meshing parameters. The above step of calculating the one or more refinement zones may be better understood by way of following description: To calculate the refinement zone, firstly, a first mesh size is calculated based on a pre-computed background mesh size. Similarly, a second mesh size is calculated based on the first mesh size. Further, the first mesh and the second mesh are created using the first mesh size and the second mesh size, respectively. The physics on the first mesh and the second mesh are simulated, respectively. Based on the simulation of the first mesh and the second mesh, the one or more absolute errors of the one or more field variables are calculated by taking an absolute difference of (i) a value of the first set of field variables obtained from the simulation of the first mesh and (ii) a value of the second set of field variables obtained from the simulation of the second mesh being mapped onto the first mesh. In other words, the mapped result is subtracted from the original results at the first mesh to obtain the one or more absolute errors. The one or more absolute errors are then compared with an error threshold wherein the one or more refinement zones in the second mesh are calculated based on this comparison by enclosing one or more error regions with an iso surface of an error equal to the error threshold. The above step of 204e and sub-steps involved in the refinement zone calculation are better understood by way of following description:

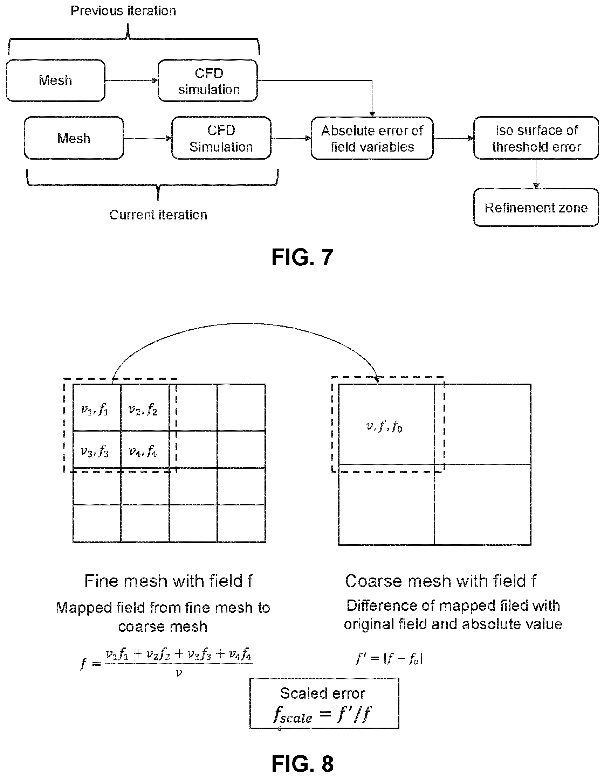

The purpose of refinement zone is to capture the physics of a problem within a specific domain. There may be a sharp change in the direction and values of associated field variables because of the meshed geometry and the physics of the problem. Capturing of sharp changes need refinement of the mesh (or meshed geometry) in those regions. The meshing processes starts with a constant mesh size for the entire domain. A CFD model is created for this mesh geometry (coarse mesh). Simulation is carried out and field variables are obtained. Similarly, a fine mesh with constant mesh size is created (fine), wherein simulation is done, and field variables are obtained. FIG. 7, with reference to FIGS. 1 through 6, depicts a flow diagram illustrating a method for calculating the refinement zone associated with the object based on the simulation of the first mesh, in accordance with an embodiment of the present disclosure. Refinement zone calculation is done in every loop. If the size of the refinement zone is comparable with the actual domain, mesh size of the entire domain is reduced, in an embodiment of the present disclosure. As depicted in FIG. 7, Both simulation outputs from current and previous iteration are compared wherein absolute error of field variables is obtained. More specifically, FIG. 8, with reference to FIGS. 1 through 7, depicts mapping of one or more field variables of the second mesh to associated field variables of the first mesh, in accordance with an embodiment of the present disclosure. Difference of the field variables is taken over the coarse mesh (first mesh), and absolute value of the difference is calculated. Further, an iso-surface (e.g., 3D surfaces(s) representation of points) is created with a threshold value of the error and these iso-surfaces may be one or more than one. In an embodiment, a scaled error is calculated by dividing the error field with field values of the first mesh. In one embodiment, this surface is taken as refinement zones and used in the meshing dictionary. In another embodiment, a bounding box over a closed volume is created to calculate the refinement zone and information of the refinement zones is passed to the meshing dictionary.

Referring to FIG 8, global error of field $f$ ($p$, $U$, $k$, $e$ etc) between first and second meshes is calculated by mapping the field $f$ from the second mesh (fine mesh) to the first mesh (coarse mesh). The value of the mapped field $f$ is calculated using equation (3). Field $f_1$, $f_2$, $f_3$, and $f_4$ are the values of the field $f$ in cell 1, 2, 3 and 4 with volumes $v_1$, $v_2$, $v_3$, and $v_4$. Error in the field $f$ is calculated by subtracting mapped field from the calculated filed on the coarse mesh. Finally, modulus of the difference is taken to get the final value of the error field $f_{error}$. In another embodiment a scaled error could be calculated by dividing $f_{error}$ with absolute value of $f$.

$$f_{mapped} = \frac{v_1 f_1 + v_2 f_2 + v_3 f_3 + v_4 f_4}{v} \qquad (3)$$

$$f_{error} = |f - f_{mapped}| \qquad (4)$$

$$f_{scaled\ error} = |f_{error}/f| \quad (4\text{-}1)$$

These error fields are positive scalars as modulus function shall convert positive, negative and vectors quantities into a positive real number. A threshold value of the field variable $f$ is calculated using equation (5). Here $\eta$ is a factor that may range from 0.1 to 0.01. In one embodiment it is taken as 0.01. Here $f_{max}$ is the global maxima of the absolute values of the field $f$.

$$f_{threshold} = \eta \times f_{max} \qquad (5)$$

An iso surface of the error with the threshold value is created and saved as STL file or format, in one embodiment of the present disclosure. In another embodiment, the scaled error as calculated by equation (4-1) is used to create the iso surface with threshold values ranging from 0.1 to 0.01. This gives extent of error region below threshold (outside the STL) and above threshold (inside the STL). Now if the extent is more than half of the domain size then the background size in a third mesh shall be half of the size of the second mesh. If the extent is less than half of the domain size, a refinement zone is created with mesh size half of the size of the second mesh. The process of refinement continues within zones until two consecutive mesh gives error less than threshold value calculated by equation (5).

Referring to steps of FIG. 2, at step 204f of the method of the present disclosure, the one or more hardware processors 104 calculate a domain size for the object based on the simulation of the first mesh. The domain size for the object is calculated when the object is either in a first region or a second region. For instance, the first region is referred to a region wherein the object is placed on a ground (or ground region), and the second region is referred to a region wherein the object is away from the ground and moving in air/water, or vice-versa. At first, a domain size is incremented by adding one or more layers on a plurality of directions of the object based on the first mesh. For instance, at first, the domain size is incremented by adding one or more layers on a plurality of directions of the object based on the first mesh. The directions may include, but are not limited to, front, back, sides, top, bottom, and the like. Based on the incremented domain size, the first mesh is simulated, and the force is calculated after performing the simulation of the first mesh. The above steps of incrementing the domain size, simulating the first mesh, and calculating the force are iteratively performed by the system 100 until a difference in the force of a current iteration and a previous iteration reaches a force threshold. The above step of 204f and the sub-steps of calculating the domain size for the object are better understood by way of the following description:

When the object is away from the ground and is moving in air or water simulation domain is needed to be extended in all the directions. Similarly, when the object is placed on the ground bottom side domain shall not be extended. However, domain shall be extended in rest of the directions as required in the case where the object is away from the ground. The object dimensions in all three directions may or may not be the same. So maximum of the all the sides of the bounding box is taken of extent calculations. Below Table 1 illustrates example domain extension thumb rule (as known in the art).

Table 1: Domain extension thumb rule

| Direction | Up stream | Down stream | Left side | Right side | Top side | Bottom side |
|---|---|---|---|---|---|---|
| Factor | 2 | 5 | 2 | 2 | 2 | 2 |

The extent of the domain affects the drag force calculated using CFD analysis. It is found that as the extend of the domain around the object is changed the force changes. It is also found that after a certain limit, a further change in the dimensions do not affect the values of the force acting on the object. The force acting on the object can be considered as objective for the calculations of domain dimensions. The 3 dimensions may affect the value of the force acting on the object in separate way depending on the shape of the object, however all the changes in the force calculation shall achieve a limiting value as domain dimensions reach to its maximum values.

$$F_{body} = f(lx_{min}, lx_{max}, ly_{min}, ly_{max}, lz_{min}, lz_{max}, CFD_{model}) \qquad (6)$$

The dimensions of the domain are first calculated using the thumb rule as shown in the Table 1. Simulation is done using the first mesh and forces acting on the object are calculated using below equations (7) - (9). A layer of the cell is added in the upstream direction with the cell size equal to the maximum of the cell size at the upstream direction. Simulation is carried out and change in the forces acting on the object is calculated. Addition of the layer is further done till change in the calculated force is below threshold value of p% (e.g., 1%) of the force acting on the object. A layer in the downstream direction is added and the change in the force is calculated. The process is stopped when the change in forces below threshold value of p% of the net force acting on the object. This process is repeated in all the direction and the final domain size is obtained.

$$F_{skin\ friction} = \int_{body} \frac{1}{2} \rho v^2 c_f d\vec{A} \qquad (7)$$

$$F_{presure} = \int_{body} \frac{1}{2} \rho v^2 p d\vec{A} \qquad (8)$$

$$F_{net} = F_{skin\ friction} + F_{presure} \qquad (9)$$

In the above equations (7)-(9), $\rho$ refers to a density of a medium, $v$ refer to characteristic velocity, $p$ refers to pressure on the object (or body), $d\vec{A}$ refers to differential area vector, and $c_f$ refers to coefficient of skin friction on the surface of the body. Value of $p$ and $c_f$ is a function of domain size ($lx_{min}$, $lx_{max}$, $ly_{min}$, $ly_{max}$, $lz_{min}$, $lz_{max}$), and CFD model parameters ($CFD_{model}$) present in equation (6).

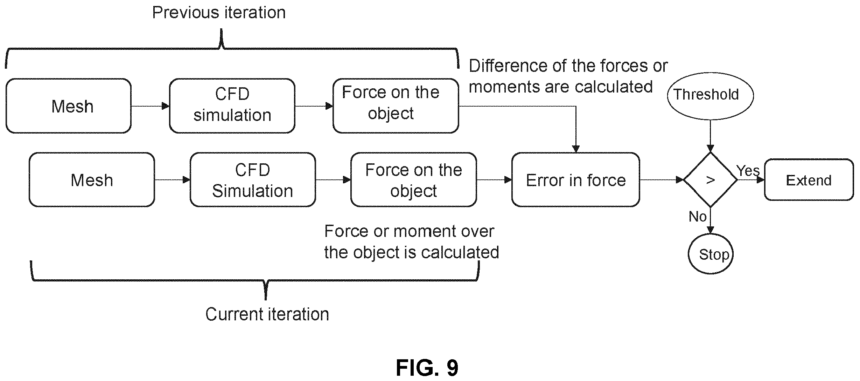

The domain size calculation and its description may be better understood from the flow diagram depicted in FIG. 9. FIG. 9, with reference to FIGS. 1 through 8, depicts a flow diagram illustrating a method for calculating the domain size based on the simulation on the first mesh, in accordance with an embodiment of the present disclosure. As can be observed from FIG. 9, the force or moment on the object obtained as output from a simulation of the current iteration and the previous iterations are compared to determine the error in force or the moment. The force error is compared with an associated threshold. Based on the comparison between the force error and the associated threshold, domain size is extended in all six directions by a step and extension is done by adding layers of mesh over the face of the object. In other words, the error in the force is greater than the associated threshold domain size is extended in all six directions by a step and extension is done by adding layers of mesh over the face of the object. The system 100 repeats the above steps 204a till 204f until the one or more surface sizes, the domain size, the one or more layer parameters, and the one or more refinement zones reach an associated threshold (e.g., surface sizes threshold, domain size threshold, layer parameter threshold, and refinement zone threshold). In other words, the system 100 repeats the above steps 204a till 204f until a respective objective associated with the one or more surface sizes, the domain size, the one or more layer parameters, and the one or more refinement zones reach an associated threshold to obtain a mesh independent grid.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method, comprising:

   receiving, via one or more hardware processors, an input comprising a first geometry of an object in a predefined format (202); and
   iteratively performing (204):

   constructing, via the one or more hardware processors, a second geometry for the object based on a first mesh generated using a first set of meshing parameters comprised in a meshing dictionary (204a);
   performing, via the one or more hardware processors, a comparison of the first geometry and the second geometry (204b);
   estimating, via the one or more hardware processors, one or more surface sizes based on the comparison (204c);
   calculating, via the one or more hardware processors, one or more layer parameters on the object based one or more y-plus values calculated from a simulation of the first mesh (204d);
   calculating, via the one or more hardware processors, one or more refinement zones associated with the object based on one or more absolute errors of one or more field variables calculated by taking an absolute difference of (i) a value of a first set of field variables on the first mesh and (ii) a value of a second set of field variables of a second mesh being mapped onto the first mesh, wherein the value of the first set of field variables on the first mesh and the value of the second set of field variables on the second mesh are obtained by simulating the first mesh and the second mesh; and wherein the first mesh and the second mesh are generated using the first set of meshing parameters and a second set of meshing parameters respectively (204e); and
   calculating, via the one or more hardware processors, a domain size for the object based on the simulation of the first mesh (204f),
   until a respective objective associated with the one or more surface sizes, the domain size, the one or more layer parameters, and the one or more refinement zones reach an associated threshold to obtain a mesh independent grid.

2. The processor implemented method as claimed in claim 1, wherein the step of performing the comparison of the first geometry and the second geometry comprises performing a comparison of a set of point clouds of the first geometry and an associated set of point clouds of the second geometry.

3. The processor implemented method as claimed in claim 1, wherein the step of calculating, via the one or more hardware processors, the domain size for the object based on the simulation of the first mesh comprises: iteratively performing:

incrementing a domain size by adding one or more layers on a plurality of directions of the object based on the first mesh; and
simulating the first mesh based on the incremented domain size;
calculating a force based on the simulation of the first mesh,
until a difference in the force of a current iteration and a previous iteration reaches a force threshold, and wherein number of the plurality of directions is based on the object being placed on a first region and in a second region.

4. The processor implemented method as claimed in claim 1, wherein the one or more layer parameters comprise number of layers to be added on the object, a size of a first layer amongst the one or more layers, and an associated expansion ratio, and wherein number of layers to be added on the object is calculated based on the simulation of the first mesh, comprises:

calculating the one or more y-plus values over a wall type of the object based on the simulation of the first mesh;
calculating a minimum size of the first mesh at a wall of the object based on the one or more y-plus values, one or more target y-plus values and a current cell size in the first mesh; and
calculating the number of layers to be added on the object based on the minimum size of the first mesh with a pre-defined expansion ratio.

5. The processor implemented method as claimed in claim 1, wherein the one or more refinement zones are calculated by:

calculating a first mesh size based on a pre-computed background mesh size;
calculating a second mesh size based on the first mesh size;
creating the first mesh and the second mesh using the first mesh size and the second mesh size, respectively;
simulating physics on the first mesh and the second mesh, respectively;
calculating the one or more absolute errors of the one or more field variables calculated by taking an absolute difference of (i) a value of the first set of field variables obtained from the simulation of the first mesh and (ii) a value of the second set of field variables obtained from the simulation of the second mesh being mapped onto the first mesh;
performing a comparison of the one or more absolute errors with an error threshold; and
calculating the one or more refinement zones in the second mesh based on the comparison by enclosing one or more error regions with an iso surface of an error equal to the error threshold.

6. A system (100), comprising:

a memory (102) storing instructions;
one or more communication interfaces (106); and
one or more hardware processors (104) coupled to the memory (102) via the one or more communication interfaces (106), wherein the one or more hardware processors (104) are configured by the instructions to:

receive an input comprising a first geometry of an object in a predefined format; and
iteratively perform:

constructing a second geometry for the object based on a first mesh generated using a first set of meshing parameters comprised in a meshing dictionary;
performing a comparison of the first geometry and the second geometry;
estimating one or more surface sizes based on the comparison;
calculating one or more layer parameters on the object based one or more y-plus values calculated from a simulation of the first mesh;
calculating one or more refinement zones associated with the object based on one or more absolute errors of one or more field variables calculated by taking an absolute difference of (i) a value of a first set of field variables on the first mesh and (ii) a value of a second set of field variables of a second mesh being mapped onto the first mesh, wherein the value of the first set of field variables on the first mesh and the value of the second set of field variables on the second mesh are obtained by simulating the first mesh and the second mesh, and wherein the first mesh and the second mesh are generated using the first set of meshing parameters and a second set of meshing parameters respectively; and calculating a domain size for the object based on the simulation of the first mesh, until a respective objective associated with the one or more surface sizes, the domain size, the one or more layer parameters, and the one or more refinement zones reach an associated threshold to obtain a mesh independent grid.

7. The system as claimed in claim 6, wherein the step of performing the comparison of the first geometry and the second geometry comprises performing a comparison of a set of point clouds of the first geometry and an associated set of point clouds of the second geometry.

8. The system as claimed in claim 6, wherein the step of calculating the domain size for the object based on the simulation of the first mesh comprises:
iteratively performing:

incrementing a domain size by adding one or more layers on a plurality of directions of the object based on the first mesh;
simulating the first mesh based on the incremented domain size;
calculating a force based on the simulation of the first mesh,
until a difference in the force of a current iteration and a previous iteration reaches a force threshold, and wherein number of the plurality of directions is based on the object being placed on a first region and in a second region.

9. The system as claimed in claim 6, wherein the one or more layer parameters comprise number of layers to be added on the object, a size of a first layer amongst the one or more layers, and an associated expansion ratio, and wherein number of layers to be added on the object is calculated based on the simulation of the first mesh, comprises:

calculating the one or more y-plus values over a wall type of the object based on the simulation of the first mesh;
calculating a minimum size of the first mesh at a wall of the object based on the one or more y-plus values, one or more target y-plus values and a current cell size in the first mesh; and
calculating the number of layers to be added on the object based on the minimum size of the first mesh with a pre-defined expansion ratio.

10. The system as claimed in claim 6, wherein the one or more refinement zones are calculated by:

calculating a first mesh size based on a pre-computed background mesh size;
calculating a second mesh size based on the first mesh size;
creating the first mesh and the second mesh using the first mesh size and the second mesh size, respectively;
simulating physics on the first mesh and the second mesh, respectively;
calculating the one or more absolute errors of the one or more field variables calculated by taking an absolute difference of (i) a value of the first set of field variables obtained from the simulation of the first mesh and (ii) a value of the second set of field variables obtained from the simulation of the second mesh being mapped onto the first mesh;
performing a comparison of the one or more absolute errors with an error threshold; and
calculating the one or more refinement zones in the second mesh based on the comparison by enclosing one or more error regions with an iso surface of an error equal to the error threshold.

11. One or more non-transitory machine-readable information storage mediums comprising one or more instructions which when executed by one or more hardware processors cause:

receiving an input comprising a first geometry of an object in a predefined format; and
iteratively performing:

constructing a second geometry for the object based on a first mesh generated using a first set of meshing parameters comprised in a meshing dictionary;
performing a comparison of the first geometry and the second geometry;
estimating one or more surface sizes based on the comparison;

calculating one or more layer parameters on the object based one or more y-plus values calculated from a simulation of the first mesh;

calculating one or more refinement zones associated with the object based on one or more absolute errors of one or more field variables calculated by taking an absolute difference of (i) a value of a first set of field variables on the first mesh and (ii) a value of a second set of field variables of a second mesh being mapped onto the first mesh, wherein the value of the first set of field variables on the first mesh and the value of the second set of field variables on the second mesh are obtained by simulating the first mesh and the second mesh; and wherein the first mesh and the second mesh are generated using the first set of meshing parameters and a second set of meshing parameters respectively ; and

calculating a domain size for the object based on the simulation of the first mesh,

until a respective objective associated with the one or more surface sizes, the domain size, the one or more layer parameters, and the one or more refinement zones reach an associated threshold to obtain a mesh independent grid.

12. The one or more non-transitory machine-readable information storage mediums of claim 11, wherein the step of performing the comparison of the first geometry and the second geometry comprises performing a comparison of a set of point clouds of the first geometry and an associated set of point clouds of the second geometry.

13. The one or more non-transitory machine-readable information storage mediums of claim 11, wherein the step of calculating, via the one or more hardware processors, the domain size for the object based on the simulation of the first mesh comprises:

iteratively performing:

incrementing a domain size by adding one or more layers on a plurality of directions of the object based on the first mesh;

simulating the first mesh based on the incremented domain size; and

calculating a force based on the simulation of the first mesh,

until a difference in the force of a current iteration and a previous iteration reaches a force threshold, and wherein number of the plurality of directions is based on the object being placed on a first region and in a second region.

14. The one or more non-transitory machine-readable information storage mediums of claim 11, wherein the one or more layer parameters comprise number of layers to be added on the object, a size of a first layer amongst the one or more layers, and an associated expansion ratio, and wherein number of layers to be added on the object is calculated based on the simulation of the first mesh, comprises:

calculating the one or more y-plus values over a wall type of the object based on the simulation of the first mesh;

calculating a minimum size of the first mesh at a wall of the object based on the one or more y-plus values, one or more target y-plus values and a current cell size in the first mesh; and

calculating the number of layers to be added on the object based on the minimum size of the first mesh with a pre-defined expansion ratio

15. The one or more non-transitory machine-readable information storage mediums of claim 11, wherein the one or more refinement zones are calculated by:

calculating a first mesh size based on a pre-computed background mesh size;

calculating a second mesh size based on the first mesh size;

creating the first mesh and the second mesh using the first mesh size and the second mesh size, respectively;

simulating physics on the first mesh and the second mesh, respectively;

calculating the one or more absolute errors of the one or more field variables calculated by taking an absolute difference of (i) a value of the first set of field variables obtained from the simulation of the first mesh and (ii) a value of the second set of field variables obtained from the simulation of the second mesh being mapped onto the first mesh;

performing a comparison of the one or more absolute errors with an error threshold; and

calculating the one or more refinement zones in the second mesh based on the comparison by enclosing one or more error regions with an iso surface of an error equal to the error threshold.

SYSTEM
100

MEMORY
102

DATABASE
108

HARDWARE
PROCESSOR(S)
104

INTERFACE(S)
106

FIG. 1

| | |
|---|---|
| receiving an input comprising a first geometry of an object in a predefined format | 202 |

iteratively performing

| | |
|---|---|
| constructing a second geometry for the object based on a first mesh generated using a first set of meshing parameters comprised in a meshing dictionary | 204a |
| performing a comparison of the first geometry and the second geometry | 204b |
| estimating a surface size based on the comparison | 204c |
| calculating one or more layer parameters on the object based one or more y-plus values calculated from a simulation of the first mesh | 204d |
| calculating one or more refinement zones associated with the object based on one or more absolute errors of one or more field variables calculated by taking an absolute difference of (i) a value of a first set of field variables on the first mesh and (ii) a value of a second set of field variables of a second mesh being mapped onto the first mesh, wherein the value of the first set of field variables on the first mesh and the value of the second set of field variables on the second mesh are obtained by simulating the first mesh and the second mesh; and wherein the first mesh and the second mesh are generated using the first set of meshing parameters and a second set of meshing parameters respectively | 204e |
| calculating a domain size for the object based on the simulation of the first mesh | 204f |

204

until a respective objective associated with the surface sizes, the domain size, the layer parameters, and the refinement zones reach an associated threshold to obtain a mesh independent grid

**FIG. 2**

FIG. 3

FIG. 4

**FIG. 5**

**FIG. 6**

Previous iteration

Mesh → CFD simulation

Mesh → CFD Simulation → Absolute error of field variables → Iso surface of threshold error → Refinement zone

Current iteration

## FIG. 7

Fine mesh with field f

Coarse mesh with field f

Mapped field from fine mesh to coarse mesh

$$f = \frac{v_1 f_1 + v_2 f_2 + v_3 f_3 + v_4 f_4}{v}$$

Difference of mapped filed with original field and absolute value

$$f' = |f - f_0|$$

Scaled error

$$f_{scale} = f'/f$$

## FIG. 8

FIG. 9

Europäisches
Patentamt

European
Patent Office

Office européen
des brevets

## EUROPEAN SEARCH REPORT

Application Number

**EP 23 20 4903**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KEEFE HUANG ET AL: "Machine Learning-Based Optimal Mesh Generation in Computational Fluid Dynamics", ARXIV.ORG, CORNELL UNIVERSITY LIBRARY, 201 OLIN LIBRARY CORNELL UNIVERSITY ITHACA, NY 14853, 25 February 2021 (2021-02-25), XP081892371, * abstract * * pg. 3, last paragraph, pg. 4, first paragraph section 3.2, par. 1 section 3.2.1, par. 1, 2 section 3.2.2, par. 1 section 3.2.3, par. 2 section 3.3., par. 1, 2, 3 section 3.4, par. 1, 2 pg. 13, par. 2 section 6, par. 1 pg. 18, bullet points 1, 2, 3 * * tables 1, 3 * * figures 2, 3, 4, 11, 12, 13 * * the whole document * | 1-15 | INV. G06F30/28 |

-----

-/--

TECHNICAL FIELDS
SEARCHED       (IPC)

G06F

The present search report has been drawn up for all claims

| Place of search | Date of completion of the search | Examiner |
|---|---|---|
| Munich | 15 April 2024 | Brandiska, Pavlina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt

European Patent Office

Office européen des brevets

**EUROPEAN SEARCH REPORT**

Application Number

EP 23 20 4903

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MOZAFFARI SAJAD ET AL: "Average-based mesh adaptation for hybrid RANS/LES simulation of complex flows", COMPUTERS AND FLUIDS, PERGAMON PRESS, NEW YORK, NY, GB, vol. 232, 14 October 2021 (2021-10-14), XP086865299, ISSN: 0045-7930, DOI: 10.1016/J.COMPFLUID.2021.105202 [retrieved on 2021-10-14] * abstract * * pg. 1, col. 2, par. 1, 2 pg. 3, col. 1, last paragraph, col. 2, par. 1 pg. 4, col. 1, par. 1 section 4, par. 1 section 4.4, par. 1 section 6, par. 1 pg. 19, col. 1, par. 2 * * figures 2, 5, 6 * * the whole document * | 1-15 | |

_____

-/--

TECHNICAL FIELDS SEARCHED (IPC)

The present search report has been drawn up for all claims

| Place of search | Date of completion of the search | Examiner |
|---|---|---|
| Munich | 15 April 2024 | Brandiska, Pavlina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| | Europäisches Patentamt European Patent Office Office européen des brevets | **EUROPEAN SEARCH REPORT** | Application Number EP 23 20 4903 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KLOSTERMANN J ET AL: "Meshing of porous foam structures on the micro-scale", ENGINEERING WITH COMPUTERS ; AN INTERNATIONAL JOURNAL FOR SIMULATION-BASED ENGINEERING, SPRINGER-VERLAG, LO, vol. 29, no. 1, 7 January 2012 (2012-01-07), pages 95-110, XP035156487, ISSN: 1435-5663, DOI: 10.1007/S00366-011-0247-5 * abstract * * section 3.2, par. 1 section 4.1, par. 1 section 4.2, par. 1 section 4.2.2, par. 1 section 4.2.3, par, 1, 2 pg. 103, col. 1, par. 1 pg. 106, col. 2, par. 1 pg. 107, col. 1, par. 1 * * figure 6 * * the whole document * ----- | 1-15 | |
| | | | TECHNICAL FIELDS SEARCHED (IPC) |

The present search report has been drawn up for all claims

| Place of search | Date of completion of the search | Examiner |
|---|---|---|
| Munich | 15 April 2024 | Brandiska, Pavlina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 3 of 3

**REFERENCES CITED IN THE DESCRIPTION**

**Patent documents cited in the description**

• IN 202221067747